# EUROPÄISCHE PATENTSCHRIFT

(11) **EP 1 899 245 B1**
(45) Veröffentlichungstag und Bekanntmachung des Hinweises auf die Patenterteilung: **12.11.2008**
(21) Anmeldenummer: 06777503.1
(22) Anmeldetag: 29.06.2006
(51) Int. Cl.: B65G 27/08

(54) **LINEAR-VIBRATIONSFÖRDERER**
LINEAR VIBRATION CONVEYOR
TRANSPORTEUR VIBRANT LINEAIRE

(30) Priorität: 05.07.2005 DE 102005031714
(43) Veröffentlichungstag der Anmeldung: 19.03.2008
(73) Patentinhaber: Rhein-Nadel Automation GmbH, 52068 Aachen (DE)
(72) Erfinder: STICKELMANN, Josef, 52076 Aachen (DE)
(74) Vertreter: Rieder, Hans-Joachim
(86) Internationale Anmeldenummer: PCT/EP2006/063674
(87) Internationale Veröffentlichungsnummer: WO 2007/003570

(56) Entgegenhaltungen:
- EP-A1- 0 881 172
- WO-A-20/05025761

## Beschreibung

Die Erfindung betrifft einen Linear-Vibrationsförderer, aufweisend einen Schwinger, eine Gegenmasse und ein Fundament, wobei der Schwinger relativ zu der Gegenmasse mittels einer ersten Federgruppe beweglich gehalten und mittels eines Vibrationsantriebs antreibbar ist, wobei die Gegenmasse mittels Federn einer zweiten Federgruppe mit dem Fundament verbunden ist, indem die Federn der zweiten Federgruppe an einem jeweils oberen Federende mit dem Fundament und an einem jeweils unteren Federende mit der Gegenmasse verbunden sind.

Ein Förderer dieser Art ist aus EP 0 578 842 A1 bekannt. Bei dem dort beschriebenen Förderer ist der Schwinger an der Gegenmasse durch Blattfedern gehalten, die am jeweils oberen Ende durch Schrauben flach gegen Anlageflächen des Schwingers und am unteren Ende durch Verschraubung gegen Anlagebereiche der Gegenmasse angepresst, d.h. in ihrer Biege- bzw. Schwingungsebene beidendig starr eingespannt werden. Die Gegenmasse ihrerseits ist an dem Fundament ebenfalls mit Blattfedern auf entsprechende Weise angebracht, so dass auch hier an jeweils beiden Federenden eine starre Einspannung erhalten wird. Die Einspannung bewirkt eine strenge Ansteuerung, wodurch die im Betrieb entstehenden Schwingungen über die Blattfedern zwischen der Gegenmasse und dem Fundament in als nachteilig empfundener Weise übertragen werden. Auch besteht die Gefahr, dass es im Betrieb beim Fördern und/oder Sortieren von Förder- bzw. Sortiergut durch aus der Umgebung über das Fundament aufgenommene und in die Gegenmasse eingeleitete Schwingungen zu Störungen kommt oder dass sich umgekehrt störende Einflüsse des Förderers auf die Umgebung ergeben. Davon ausgehend liegt der vorliegenden Erfindung die Aufgabe zugrunde, den Linear-Vibrationsförderer der eingangs genannten Art vorteilhaft weiterzubilden, so dass die genannten Nachteile möglichst weitgehend vermieden werden.

Gemäß der Erfindung wird diese Aufgabe zunächst und im Wesentlichen in Verbindung mit den Merkmalen gelöst, dass an den Federn der zweiten Federgruppe zumindest ein freier Federabschnitt im Bereich seines oberen Endes drehbar an dem Fundament und/oder im Bereich seines unteren Endes drehbar an der Gegenmasse angelenkt ist. Die Gegenmasse stellt gleichsam einen Bezugskörper oder Grundgestell für den Schwinger dar, während das Fundament im Verhältnis zu der Gegenmasse den Festpunkt bildet. Durch eine gelenkartige Anbindung eines freien Federabschnittes, d.h. eines im Einbauzustand unter den im Betrieb an den Enden auftretenden Relativbewegungen in sich in einer oder in mehreren Richtungen verformbaren Federabschnittes, oder einer Feder am insbesondere oberen Ende wird ein Drehpunkt und dadurch ein Schwingungsradius der Gegenmasse relativ zum Fundament (Festpunkt) bestimmt. Je nach Typ und konkreter Ausgestaltung können die Federn der zweiten Federgruppe dazu auch über die ganze Federlänge (d.h. nicht nur in einem Federabschnitt) gelenkig an ihrem oberen und/oder unteren Ende angelenkt sein. Bevorzugt liegt der obere Drehpunkt möglichst nahe oder sogar direkt am Fundament, so dass eine zum Fundament nahezu neutrale Anlenkung ermöglicht wird. Eventuelle geringe Abweichungen von Drehpunkt und Schwingungsradius können im Bedarfsfall durch den Anbau von unterschiedlichen Schwingaufbauten günstig beeinflusst werden. Da es sich im Bereich der Anlenkung jeweils nur um einen Drehpunkt handelt, werden kaum Schwingungen in horizontalen Richtungen, bzw. in Förderrichtung und dazu quer übertragen. Anders als bei der bekannten strengen Ansteuerung oder als bei einer ebenfalls bekannten Aufstellung der Gegenmasse auf Gummipuffern werden ordnungsgemäß auch in diesen Richtungen keine nennenswerten Schwingungen in das Fundament (oder umgekehrt) übertragen, wodurch das Laufverhalten des Förderers nachteilig beeinflussende Rückkopplungen im Schwingsystem vermieden werden. Auch wenn bei den die Gegenmasse und den Schwinger verbindenden Federn der ersten Federgruppe eine vergleichsweise starre Ansteuerung verwirklicht ist, wird durch die erfindungsgemäße Aufhängung der Gegenmasse am Fundament insbesondere auch in Verbindung mit den noch nachfolgend beschriebenen Merkmalen zu bevorzugten Weiterbildungen selbst bei unterschiedlichen Gewichtsaufbauten ein überraschend schwingungsfreies System und dadurch ruhiges Laufverhalten erreicht, das sich unmittelbar auf die zu fördernden bzw. zu sortierenden Werkstücke überträgt. Dies ermöglicht es, dass die Werkstücke gleiten, ohne auf den Förderbahnen die Bodenhaftung zu verlieren. Dies wiederum gestattet es, dass selbst kleinste Sortiermerkmale ausgenutzt werden können (bspw. durch eine Kalibrierung über Kanten im Bereich von 1/10 bis 7/100 mm) und die Geräuschentwicklung wesentlich verringert werden kann.

Es besteht die Möglichkeit, dass der freie Federabschnitt im Bereich seines oberen und/oder unteren Endes um eine oder mehrere verschiedene, insbesondere um beliebige, zur Federlängsrichtung senkrechte Richtungen und/oder um die Federlängsrichtung drehbar angelenkt ist. Wird ein solcher räumlicher Drehpunkt vorzugsweise am oberen Ende als Anlenkung vorgesehen, werden über die mit den Federn gebildete Aufhängung in dazu quer verlaufenden Richtungen kaum Schwingungen zwischen der Gegenmasse und dem Fundament übertragen. Die Gegenmasse ist am Fundament in vorzugsweise verschiedenen Querrichtungen gelenkartig dreh- bzw. auslenkbar aufgehängt. Bevorzugt ist ebenfalls, dass der freie Abschnitt der Federn in Federlängsrichtung federelastisch längenveränderbar und/oder auch in sich in einer oder mehreren, insbesondere in beliebigen, Richtungen quer zur Federlängsrichtung federelastisch biegbar ist. Eine solche federelastisch nachgiebige Verformbarkeit von Federn der zweiten Federgruppe liefert einen weiteren Beitrag zur gewünschten Schwingungsentkopplung zwischen Fundament und Gegenmasse. Speziell besteht die Möglichkeit, dass um beliebige, quer zur Federlängsrichtung liegende Richtungen bzw. Raumachsen eine praktisch gleiche Biegsamkeit besteht, so dass, anders als bspw. bei Blattfedern, eine zur Federlängsachse quasi rotationssymmetrische Biegsamkeit vorliegt. Je nach Biegsamkeit können bei den Federn der zweiten Federgruppe das obere und das untere Ende relativ zueinander in verschiedenste Richtungen verlagerbar sein. Obwohl die Federn der zweiten Federgruppe aufgrund der Aufhängung an ihren Enden durch eine äußere Zugkraft belastet werden, wurde als für die gewünschte Schwingungsentkopplung besonders vorteilhafte Lösung gefunden, dass die Federn der zweiten Federgruppe als Zylinder-Druckfedern ausgebildet sind. Die Federn der zweiten Federgruppe, bei denen es sich insbesondere um Zylinderdruckfedern handeln kann, werden beispielsweise aus Stahl gefertigt. Vorzugsweise kann es sich dabei um einen Federstahl handeln. Andererseits kommen aber grundsätzlich auch andere Stahlsorten oder gänzlich andere, geeignete Materialien in Betracht. Solche Druckfedern weisen gegenüber Zylinder-Zugfedern den Vorteil auf, dass im unbelasteten Zustand benachbarte Windungen bei jeweils gleicher Lage am Umfang in Federlängsrichtung voneinander beabstandet sind, so dass unter Belastung sowohl eine Dehnung als auch eine Stauchung erfolgen kann und auch eine seitliche Biegung freier möglich und weniger abhängig von der momentanen Dehnung ist. Ein einfache und zur Schwingungsentkopplung gut geeignete Möglichkeit zur Befestigung der Federn der zweiten Federgruppe wird darin gesehen, dass am oberen und/ oder am unteren Ende der Zylinder-Druckfedern einzelne oder mehrere Windungen in Umfangs-Klemmhalterungen eingespannt sind. Eine Umfangs-Klemmhalterung kann z.B. zwei Umfangssegmente aufweisen, die gemeinsam ein zylindrisches Federende umgreifen und mittels gegenseitiger Spannelemente, wie Schrauben, im Abstand zueinander einstellbar sind, dass sie sich so auf dem Federende lösbar festklemmen lassen. Solche Umfangs-Klemmhalterungen können zur Halterung einer Zylinder-Druckfeder am Fundament und darunter beabstandet an der Gegenmasse angeordnet sein, wobei die mittleren, zwischen den beiden Umfangs-Klemmhalterungen liegenden Federwicklungen den sog. freien Federabschnitt bilden. Bezüglich des Fundaments ist eine stabile und gewichtssparende Gestaltung dadurch möglich, dass es eine Grundplatte und sich davon nach oben erstreckende Träger aufweist, im Bereich deren oberen Enden die Federn der zweiten Federgruppe gehalten sind. In diesem Zusammenhang ist ferner bevorzugt, dass die Gegenmasse rahmen- bzw. gestellartig ausgebildet ist und zwei in Längsrichtung des Linear-Vibrationsförderers orientierte, quer voneinander beabstandete Wangen aufweist, dass der Schwinger zwei in Längsrichtung orientierte, quer voneinander beabstandete Längsträger aufweist, wobei vorzugsweise die Längsträger bei bereichsweiser Überlappung zwischen den Wangen liegen, dass sich die Träger von der Grundplatte ausgehend in im Vergleich zu den Längsträgern geringerem Querabstand erstrecken und an ihren oberen Enden Vorsprünge quer zur Längsrichtung durch Ausnehmungen der Wangen und/oder Längsträger treten, wobei die Federn der zweiten Federgruppe an den Vorsprüngen und an Halterungen auf der Außenseite der Längsträger befestigt sind. Dies ermöglicht einen quer zur Längs- bzw. Förderrichtung großen Seitenabstand der Federn der zweiten Federgruppe, mit denen die Gegenmasse am Fundament aufgehängt ist. Bevorzugt ist ferner vorgesehen, dass bei dem Linear-Vibrationsförderer die Längsrichtung des Schwingers in Förderrichtung zu einer horizontalen Bezugslinie fallend geneigt, vorzugsweise unter einem Neigungswinkel von ca. 7 bis 10°, verläuft. Betreffend die erste Federgruppe ist bevorzugt, dass es sich bei deren Federn um Biegefedern, insbesondere jeweils um aus Blattfedern zusammengesetzte Biegefederpakete, handelt, die mit dem Schwinger und der Gegenmasse bspw. über lageveränderbare Einspannungen an ihren Enden fest verbunden sind. Ihre Anzahl und Anordnung kann wie bei den Federn der ersten Federgruppe abhängig von den Abmessungen des Förderers und weiteren Anforderungen festgelegt werden. Die Orientierung der Blattfedern bzw. Pakete ist so gewählt, dass eine relative Beweglichkeit zwischen Schwinger und Gestell zur Erzielung der Förderbewegung erhalten wird. Eine zweckmäßige Weiterbildung wird darin gesehen, dass die Blattfedern mit beiden Enden an je einem quer zur Längsrichtung orientierten Distanzstück befestigt sind, wobei sich das untere Distanzstück zwischen den Wangen der Gegenmasse und das obere Distanzstück zwischen den beiden Längsträgern des Schwingers erstreckt. Eine gewünschte Anpassung der Federstärke kann u.a. durch geeignete Wahl der Abmessungen der Anzahl der Blattfedern je Federpaket erfolgen. Darüber hinaus ist bevorzugt, dass die Neigungsstellung der Federn der ersten Federgruppe zu einer Senkrechten durch die Förderrichtung des Schwingers durch Verlagerung des unteren und/oder oberen Angriffspunktes dieser Federn stufenlos verstellbar ist. Es besteht dazu die Möglichkeit, dass vorzugsweise das untere Distanzstück entlang in den Wangen vorhandener Bogennuten verschieblich und in gewünschter Position arretierbar ist, so dass eine Neigungsverstellung durch Drehung relativ zu dem oberen Distanzstück möglich ist. Zu weiteren, diesbezüglich auch im Rahmen der vorliegenden Erfindung bestehenden Möglichkeiten wird Bezug auch auf die Offenbarung von DE 43 12 711 A1 genommen.

Der Vibrationsantrieb kann je nach Anforderungen ein oder mehrere elektrische Magnetantriebe umfassen. Ein Magnetantrieb kann einen vorzugsweise an der Gegenmasse montierten Elektromagnet und einen entsprechend vorzugsweise am Schwinger angeordneten Anker aufweisen, der von dem Elektromagnet durch einen Magnetspalt beabstandet ist. Angesichts der durch die Federn der ersten Federgruppe bestimmten Beweglichkeit zwischen Schwinger und Gegenmasse wird der Magnetspalt zufolge der im Betrieb wechselnden Abstoßung und Anziehung zwischen Elektromagnet und Anker laufend verändert, wodurch der gewünschte Vibrationsantrieb entsteht. Die Ausbildung und Ausrichtung der Federn der ersten Federgruppe und der Magnetantriebe ist bevorzugt so aufeinander abgestimmt, dass die Neigungseinstellung der Federn ohne Einfluss auf den Magnetspalt veränderbar ist. Der Schwinger und/oder die Gegenmasse sind vorzugsweise daran angepasst, dass eine gedachte Verbindungslinie zwischen ihren beiden Schwerpunkten möglichst parallel oder mit nur begrenzter Neigung zu der gewünschten Förderrichtung verläuft. Um dies zu erreichen, können an dem Schwinger und/oder an der Gegenmasse sog. Konter- bzw. Trimmgewichte in veränderbarer Gewichtsstärke und/oder -lage anbringbar sein. Zur Gewichtsanpassung kann ein Kontergewicht bspw. mehrere, im Bedarfsfall halterbare Teilgewichte aufweisen. Eine zweckmäßige Ausführung wird darin gesehen, dass das Kontergewicht der Gegenmasse daran im Bereich der Eingabeseite des Linear-Vibrationsförderers, vorzugsweise stimendseitig, angeordnet ist, und dass das Kontergewicht des Schwingers daran im Bereich der Ausgabeseite des Linear-Vibrationsförderers, vorzugsweise unterseitig, angebracht ist. Die Verstellmöglichkeit der Kontergewichte, die je nach Ausführung ggf. sogar stufenlos möglich ist, bringt in Zusammenhang mit der stufenlosen Verstellmöglichkeit der Blattfederpakete den Vorteil mit sich, dass das Schwingungsverhalten der Werkstückführungsbahn des Schwingers selbst bei großer Länge so einstellbar ist, dass es über die gesamte Länge hinweg gleichmäßig auf den gewünschten Transport der Werkstücke durch Mikrowurf abgestimmt ist. Durch die beschriebene Anordnung der Schwerpunkte von Gegenmasse und Schwinger kann das Schwingsystem mit einem sehr flachen Wurfwinkel betrieben werden. Die Federn der ersten Federgruppe bzw. die Blattfedern können bei entsprechend flacher Neigung der durch die Schwerpunkte führenden Verbindungslinie sowohl zu dieser Verbindungslinie als auch zu der Förderrichtung bzgl. ihrer Feder-Längsrichtung etwa senkrecht oder mit dazu gewünschter Neigung eingestellt werden. Um eine hohe Fördergeschwindigkeit zu erreichen, kann eine große Amplitude in Förderrichtung eingestellt werden, so dass sich Fördergeschwindigkeiten von bspw. 8 bis 10 Metern pro Minute und darüber hinaus erreichen lassen. Gerade in diesem Zusammenhang erweist sich die beschriebene erfindungsgemäße Aufhängung der Gegenmasse am Fundament von Vorteil, mit der auch dann noch ein geräuscharmer Betrieb mit besten Laufeigenschaften ermöglicht wird. Für den erfindungsgemäßen Linear-Vibrationsförderer bestehen zahlreiche Anwendungsmöglichkeiten. Insbesondere können an dem Schwinger Mittel zum Fördern und/oder linearen Sortieren von Förder- bzw. Sortiergut vorgesehen sein. Speziell besteht die Möglichkeit eines modularen Aufbaus, demzufolge Werkstückführungsbahnen und/oder Sortiereinrichtungen in auf die Anwendung abgestimmter Ausführung und Anzahl kombinierbar sind. Beispielsweise können mehrere Schwingrinnen nebeneinander liegen, oder Teile der Sortiereinrichtung können ausgetauscht werden, um neue Sortierkriterien festzulegen.

Die Erfindung wird nachfolgend mit Bezug auf die beigefügten Figuren, welche bevorzugte Ausführungsbeispiele wiedergeben, exemplarisch beschrieben. Darin zeigt:
- Fig. 1: den erfindungsgemäßen Linear-Vibrationsförderer gemäß einer ers- ten bevorzugten Ausführungsform in Seitenansicht, teilweise auf- gebrochen,
- Fig. 2: eine Draufsicht gemäß Blickrichtung II nach Fig. 1,
- Fig. 3: eine Schnittansicht entlang Schnittebene III - III nach Fig. 1,
- Fig. 4: eine Schnittansicht entlang Schnittlinie IV - IV nach Fig. 1,
- Fig. 5: eine Schnittansicht entlang Schnittlinie V - V nach Fig. 1,
- Fig. 5a): in einer zu Fig. 5 analogen Schnittansicht eine etwas abweichende bevorzugte Ausführungsform,
- Fig. 6: einen vergrößerten Teilschnitt zu Detail VI nach Fig. 1,
- Fig. 7: einen vergrößerten Teilschnitt zu Detail VII nach Fig. 1,
- Fig.: 8 einen Längsschnitt entlang der Schnittlinie VIII - VIII nach Fig. 2,
- Fig. 9: eine Vergrößerung von Detail IX nach Fig. 2,
- Fig. 10: den erfindungsgemäßen Linear-Vibrationsförderer gemäß einer zweiten bevorzugten Ausführungsform in einem Längsschnitt,
- Fig. 11: eine Draufsicht in Blickrichtung XI nach Fig. 10 und
- Fig. 12: eine Schnittansicht entlang Schnittlinie XII - XII nach Fig. 10.

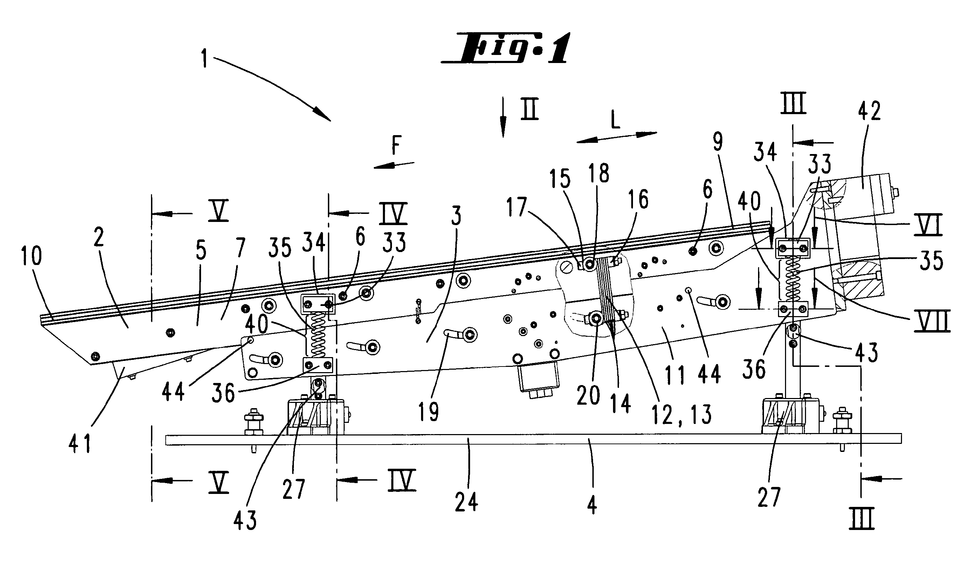

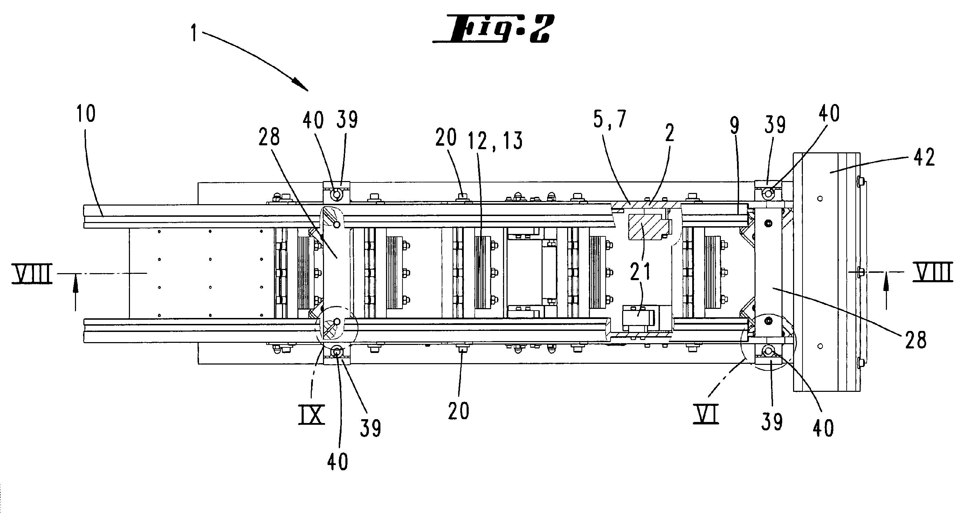

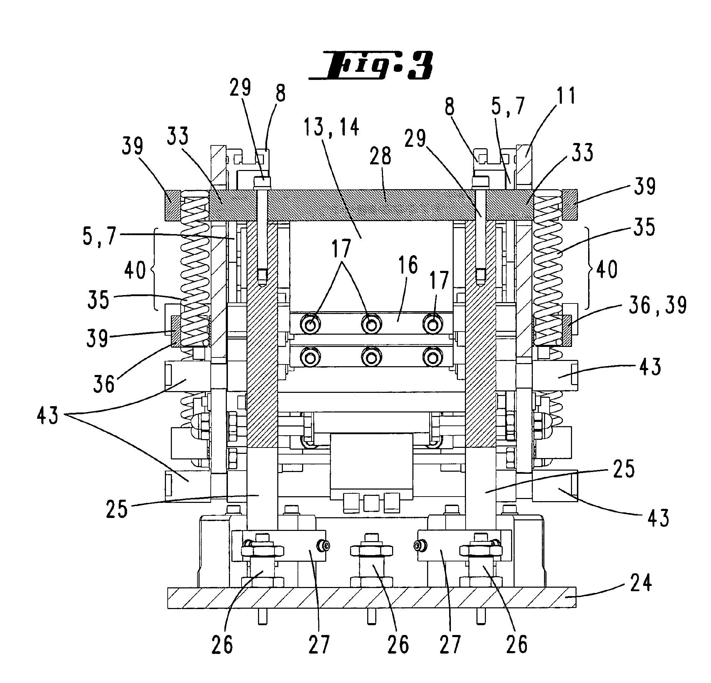

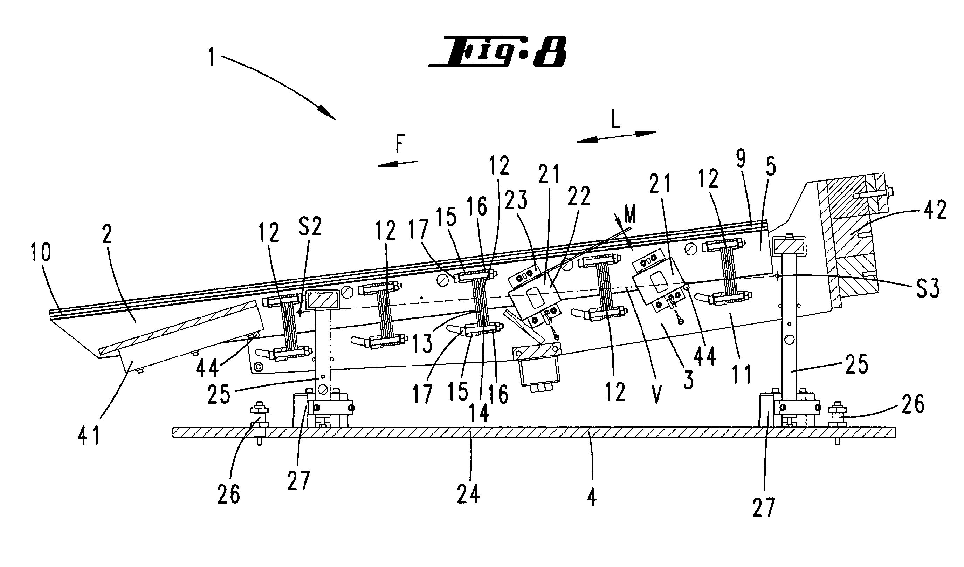

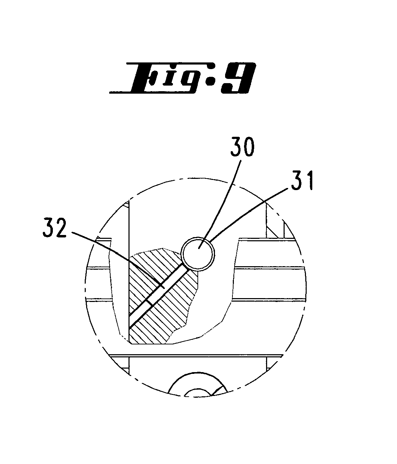

Die Figuren 1 bis 9 zeigen den erfindungsgemäßen Linear-Vibrationsförderer 1 in einer ersten bevorzugten Ausführungsform. Dieser weist einen Schwinger 2, eine Gegenmasse 3, und ein Fundament 4 auf. Der Schwinger 2 besitzt seinerseits zwei in Längsrichtung L orientierte, quer voneinander beabstandete Längsträger 5, wobei die Beabstandung quer zur Längsrichtung L u.a. durch eine Mehrzahl von nicht näher dargestellten Abstandshaltern erfolgt. Der Querschnitt der Längsträger 5 ist deutlich den Figuren 3 bis 5 zu entnehmen. Demgemäß besitzen die Längsträger 5 im Wesentlichen den Querschnitt eines Winkelprofils, an dessen in Einbaulage senkrechten Schenkeln 7 die in Fig.1 durch Verschraubungen 6 angedeuteten, senkrecht zur Zeichenebene von Fig.1 verlaufenden Abstandshalter befestigt sind. Die Schenkel 7 gehen an ihrem oberen Rand in horizontale Schenkel 8 über, welche ihrerseits als C-Profil mit nach oben weisender Öffnung ausgebildet sind. Besagte C-Profile stellen in Längsrichtung L verlaufende Längsführungen dar, mit deren Hilfe sich zeichnerisch nicht mit dargestellte Einrichtungen bspw. zum Fördern und/oder Sortieren von Werkstücken, wie Werkstückförderrinnen, Sortiermodule usw., an einer in Längsrichtung gewünschten Position fixieren lassen. Die genannten Einrichtungen können dazu an ihrer Unterseite T-profilartige Vorsprünge aufweisen, die entlang der C-Profile verfahrbar sind, wobei eine lösbare Arretierung entweder in der Führung selbst oder auf sonstige Weise möglich ist. Bei einer im Beispiel gedachten, zu den C-Profilen parallelen Werkstückführungsbahn erstreckt sich bei die Förderrichtung F zu einer horizontalen Bezugslinie unter einem Neigungswinkel von etwa 7 Grad fallend von einer Eingabeseite 9 für die (nicht dargestellten) Werkstücke bis zu einer Ausgabeseite 10. Die Gegenmasse 3 weist zwei in Längsrichtung L orientierte, quer voneinander beabstandete Wangen 11 auf, wobei auch hier die Querbeabstandung u.a. durch zeichnerisch nicht mit dargestellte Abstandshalter und Versteifungselemente erfolgt. In dem gewählten Beispiel ist der Querabstand der Wangen 11 so groß bemessen, dass die Längsträger 5 unter bereichsweiser Überlappung in den Zwischenraum treten können (vgl. dazu die Figuren 1 und 8). Der Schwinger 2 ist relativ zu der Gegenmasse 3 mittels einer ersten Federgruppe aus Federn 12 federelastisch beweglich abgestützt. Jede Feder 12 wird in dem Beispiel von einem Biegefederpaket 13 aus zu einem Stapel geschichteten Blattfedern 14 gebildet. Die in der gezeigten Einbaulage oberen Enden der Blattfedern 14 sind zwischen einem zur Zeichenebene von Fig.1 senkrecht verlaufenden Distanzstück 15 und einem Gegenhalter 16 mittels dazu quer verlaufender Schrauben 17 eingespannt. Eine solche Einspannung ist auch an den unteren Blattfederenden vorgesehen. Das obere Distanzstück 15 ist zwischen den Längsträgern 5 um seine Längsachse drehbar aufgenommen und kann in gewünschter Drehlage mittels durch Bohrungen der Längsträger 5 darin eingreifender Arretierschrauben 18 gesichert werden. Das untere Distanzstück ist entlang in die Wangen 11 eingebrachter, diese durchsetzende Bogennuten 19 mit weiteren, dadurch eingreifenden Arretierschrauben 20 verschiebbar und in gewünschter Lage lösbar zu fixieren. Bei der gezeigten Ausführung sind in Längsrichtung L verteilt fünf in dieser Weise verstellbare Federn 12 der ersten Federgruppe vorgesehen. Der Linear-Vibrationsförderer 1 weist einen Vibrationsantrieb mit vier Magnetantrieben 21 auf, die paarweise an den Innenseiten der Längsträger 5 und Wangen 11 angeordnet sind. Ein Magnetantrieb 21 besitzt einen an der Gegenmasse 3 befestigten Elektromagnet 22 und einen an dem Schwinger 2 befestigten Anker 23, die durch einen sich im Betrieb laufend ändernden Magnetspalt M beabstandet sind.

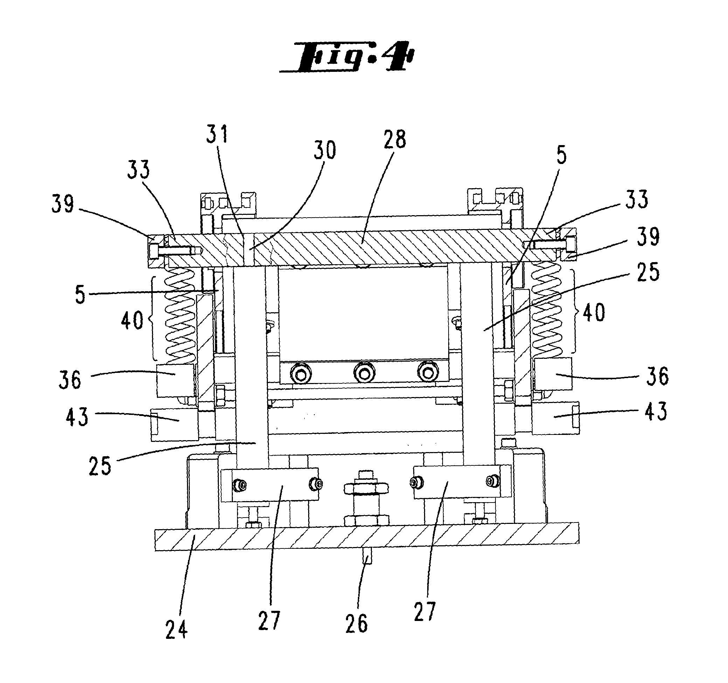

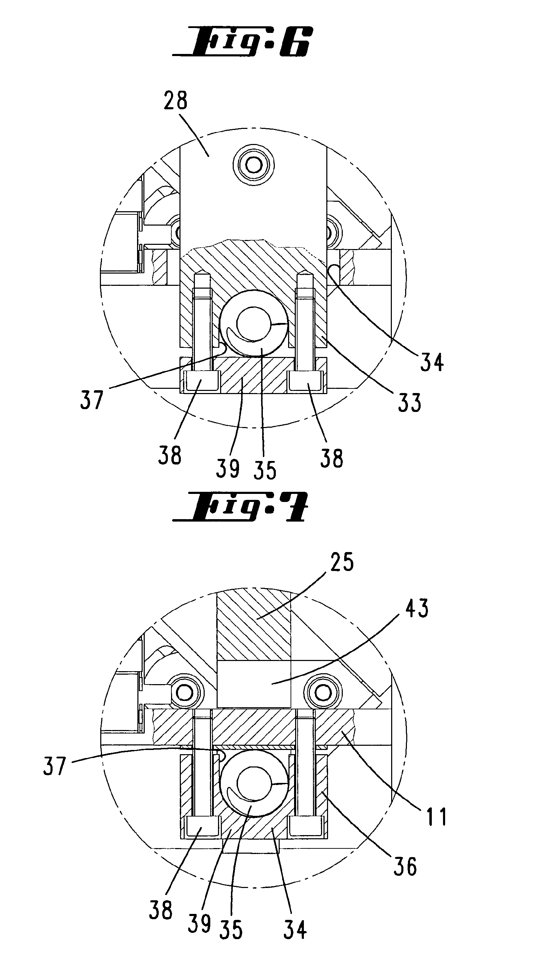

Das Fundament 4 weist eine Grundplatte 24 sowie in dem Beispiel vier Träger 25 auf, die sich von der Grundplatte 4 senkrecht nach oben erstrecken. Die Grundplatte 24 kann bspw. mittels Verankerungen 26 fest an einem Untergrund befestigt werden. Die Träger 25 sind in auf der Grundplatte 24 aufgeschraubten Klemmschuhen 27 fest eingespannt. Wie die Figuren 3, 4 und 8 zeigen, erstrecken sich die beiden Träger auf der Eingabeseite 9 in dem durch die Wangen 11 gebildeten Zwischenraum. Die beiden, näher an der Ausgabeseite 10 liegenden Träger 25 laufen aufrecht in den von den Längsträgern 5 und Wangen 11 gebildeten Zwischenraum. Auf die oberen Enden der Träger 25 sind (vgl. besonders Figuren 3, 4) paarweise quer zur Längsrichtung orientierte Querträger 28 aufgeschraubt. Bei den eingabeseitigen Trägern 25 sind dazu Befestigungsschrauben 29 vorgesehen, bei den beiden ausgabeseitigen Trägern 25 erstreckt sich ein Vorsprung 30 in eine Bohrung 31 des Querträgers 28, wobei der Eingriff durch eine Madenschraube 32 gesichert ist. Die Querträger 28 bilden bezüglich der Träger 25 quer zur Längsrichtung L hervortretende Vorsprünge 33, die sich durch Ausnehmungen 34 in den Längsträgern 5 bzw. in den Wangen 11 nach außen erstrecken. An je einem Vorsprung 33 ist eine zu der zweiten Federgruppe gehörende Feder 35 gehalten, die an ihrem unteren Ende an je einer Halterung 36 auf der Außenseite der Wangen 11 befestigt ist. Mittels dieser zweiten Federgruppe ist die Gegenmasse 3 an dem Fundament 4 federelastisch aufgehängt, indem die Federn 35 an ihrem jeweils oberen Federende mit dem Fundament 4 und an ihrem jeweils unteren Federende mit der Gegenmasse 3 verbunden sind. Die Federn 35, auf deren Enden unter anderem eine Zugkraft wirkt, sind als Zylinder-Druckfedern ausgebildet, deren Windungen in Federlängsrichtung beabstandet liegen. Die Federn 35 sind an den Vorsprüngen 33 und Halterungen 36 mittels Klemm-Halterungen im Bereich ihrer an den Federenden jeweils letzten Windungen eingespannt. Fig. 6 verdeutlicht, dass dazu an den Vorsprüngen 33 eine U-förmige Ausnehmung 37 vorhanden ist, deren Breite an den Außendurchmesser der Feder 35 angepasst ist, wobei andererseits deren Tiefe etwas geringer als der Feder-Außendurchmesser ist. Die Feder 35 ist in die Ausnehmung 37 eingesetzt und wird im Bereich der letzten Windungen mittels eines durch Schrauben 38 gegen den Vorsprung 33 anziebaren Klemmteils 39 eingespannt. In Fig. 7 ist die Situation insofern umgekehrt, als die U-förmige Ausnehmung 37 in dem Klemmteil 39 liegt. Die in Federlängsrichtung zwischen den beiden Einspannungen liegenden Federwindungen bilden einen freien Federabschnitt 40. Dieser ist durch die Art der Federeinspannung an seinem oberen Ende gelenkartig drehbar am Vorsprung 33, d.h. am Fundament 4, und im Bereich seines unteren Endes gelenkartig drehbar an der Halterung 36 der Gegenmasse 3 angelenkt, so dass Schwingungen der Gegenmasse 3 quer zur Längsrichtung der Federn 35 nicht auf das Fundament übertragen werden. Die gewünschten gelenkartigen Anschlüsse des freien Federabschnitts 40 entstehen dabei jeweils in dem die Einspannung bzw. Klemmhalterung verlassenden Bereich der Federwindung.

Von den Trägern 25 gehen seitlich, d.h. senkrecht zur Zeichenebene von Fig.1, Exzenter 43 aus, deren Drehachse durch eine zugleich zur Klemmung in einer gewünschten Drehlage dienende, durch eine Bohrung im Exzenter in den Träger 25 eingeschraubte Schraube gebildet wird. Vier Exzenter 43 sind an den Trägern 25 so angeordnet, dass sie sich in ihrer Längsrichtung bis unter den unteren Rand der Wangen 11 erstrecken. In der in Fig.1 gezeigten Drehposition, in der die Exzenter nach unten gedreht sind, besteht kein Kontakt mit den Wangen 11, so dass die Gegenmasse 3 frei aufgehängt ist. Andererseits können die Exzenter 43, um die Federn 35 symmetrisch einbauen oder ausbauen zu können, entweder in ihre obere Lage oder eine gewünschte Zwischenstellung gedreht werden, wodurch es zur Abstützung bzw. zum Anheben der Gegenmasse 3 kommt. Auch eine Abstützung zwischen dem Schwinger 2 und der Gegenmasse 3 ist möglich, um die Federn 12 in gewünschter Weise einstellen zu können. Die Wangen 11 sind dazu mit Durchgangsbohrungen 44 versehen, die in einer für die Federeinstellung gewünschten Relativlage mit Bohrungen (nicht dargestellt) in den Längsträgern 5 überlappen, so dass sich zur vorübergehenden Fixierung Stifte darin durchgehend einsetzen lassen.

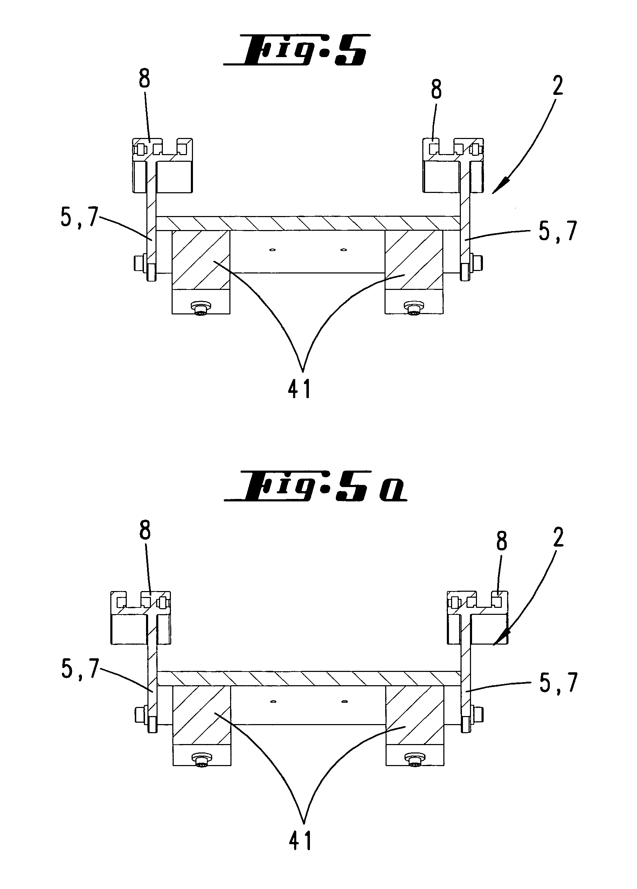

In weiterer Einzelheit ist vorgesehen, dass an dem Schwinger 2 im Bereich der Ausgabeseite 10 des Linear-Vibrationsförderers 1 unterseitig Trimm- bzw. Kontergewichte 41 (vgl. Fig. 5) befestigt und somit in praktisch tiefster Lage angeordnet sind. An der Gegenmasse 3 ist im Bereich der Eingabeseite 9 des Linear-Vibrationsförderers 1 stirnendseitig ein mehrteiliges Trimm- bzw. Kontergewicht 42 vorgesehen, dessen Bestandteile bedarfsgerecht zu kombinieren und, wie in Fig.1 erkennbar, in verschiedenen Höhen befestigbar sind. Durch die Abstimmung der Kontergewichte besteht die Möglichkeit, die Lage des Schwerpunktes S₂ des Schwingers 2 und des Schwerpunktes S₃ der Gegenmasse 3 so zu beeinflussen, dass die Verbindungslinie V praktisch parallel oder nur unter geringer Neigung zur Längsrichtung L verläuft. In Fig. 8 ist dieser Zusammenhang nur schematisch, d.h. ohne Angabe der tatsächlichen Lage der Schwerpunkte S₂, S₃ angedeutet. Durch das Kontergewicht 41 wird ein niedriger Schwerpunkt S₂ und durch das Kontergewicht 42 ein hoher Schwerpunkt S₃ unterstützt. Die Ausrichtung der Federn 12 der ersten Federgruppe kann somit gleichzeitig nahezu senkrecht zur Förderrichtung F und zur Verbindungslinie V (oder zu einer solchen Ausrichtung unter gewünschter Neigung) erfolgen. In Fig. 8 ist eine bzgl. der Förderrichtung F senkrechte Ausrichtung der Federn 12 gezeigt, bevorzugt ist aber auch eine demgegenüber um etwa 5 Grad im Uhrzeigersinn gedrehte Ausrichtung. Des Weiteren ist in dem Beispiel die Ausrichtung der Magnetantriebe 21 so gewählt, dass die Relativbewegung zwischen Elektromagnet 22 und Anker 23 nicht senkrecht, sondern zur Längsrichtung der Federn 12 schräg geneigt verläuft, so dass sich im Vergleich zu einer senkrechten Ausrichtung ein größerer mechanischer Hub zwischen Schwinger 2 und Gegenmasse 3 bei zugleich größerer mechanischer Hubkraft erreichen lässt. Die in Fig. 5a gezeigte Variante weicht von der in Fig. 5 dargestellten Ausführung insofern ab, als hier die horizontalen Schenkel 8 nicht nach innen, sondern nach außen weisen.

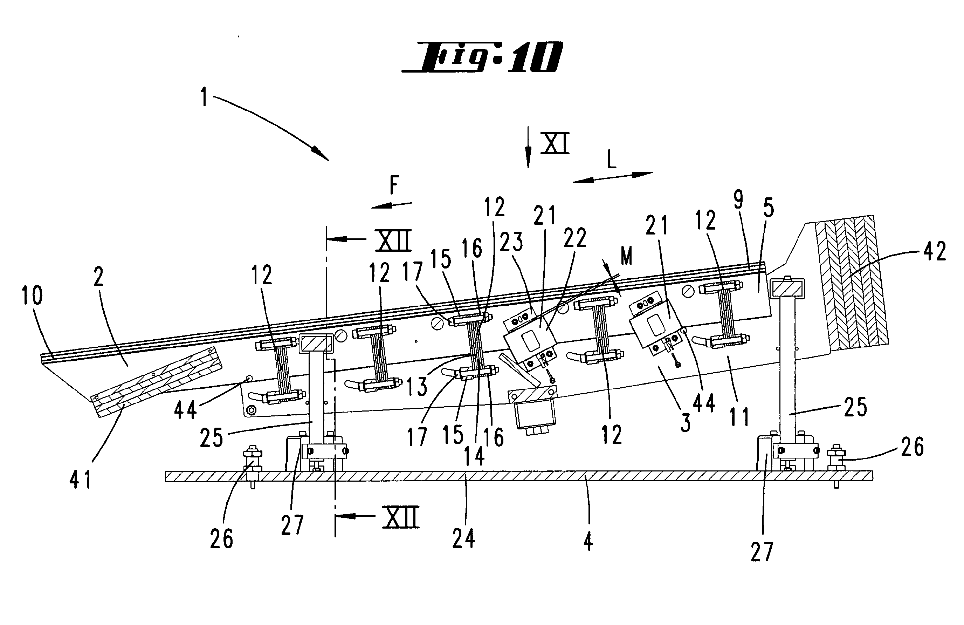

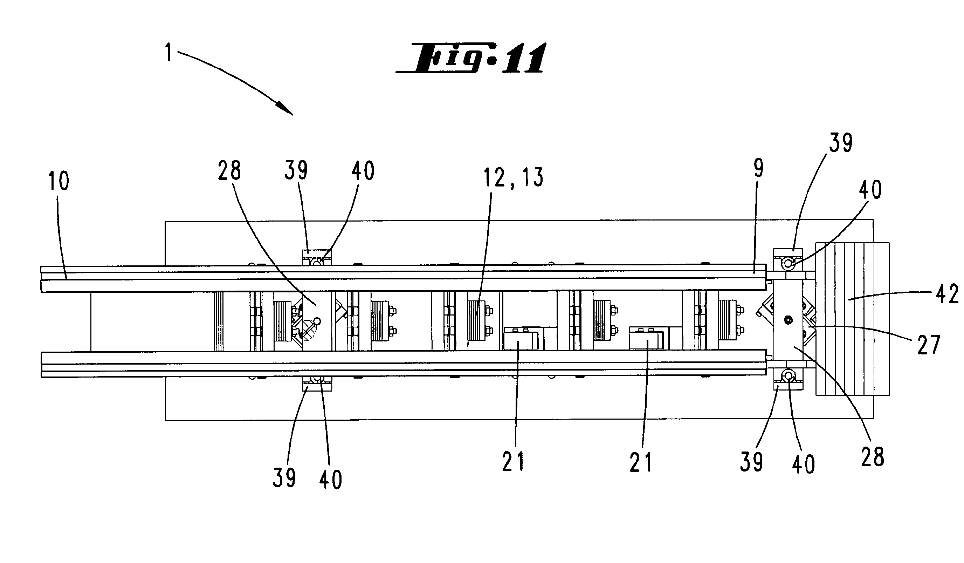

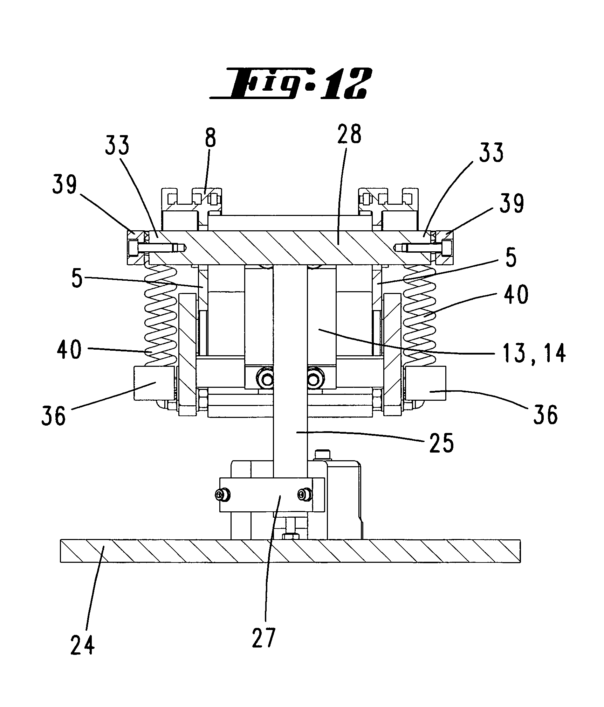

Die Figuren 10 bis 12 zeigen den erfindungsgemäßen Linear-Vibrationsförderer 1 in einer weiteren bevorzugten Ausführungsform, wobei einander entsprechende Elemente mit gleichen Bezugszeichen versehen sind. Ein Unterschied zu der vorangehend beschriebenen Ausführung liegt darin, dass hier nicht vier, sondern nur zwei, dafür in Querrichtung mittige Träger 25 von der Grundplatte 4 ausgehen. Als weiteren Unterschied zeigt Fig.11, dass auch nur zwei, auf der gleichen Längsseite angeordnete Magnetantriebe 21 vorhanden sind. Darüber hinaus sind die Kontergewichte 41 und 42 abweichend gestaltet, indem diese jeweils aus mehreren in der Anzahl veränderbaren und mittels Schrauben zu sichernden Gewichtsplatten bestehen. Die zuvor beschriebenen erfindungsgemäßen Merkmale und ihre Wirkungsweise bleiben hiervon unberührt.

## Patentansprüche

1. Linear-Vibrationsförderer, aufweisend einen Schwinger (2), eine Gegenmasse (3) und ein Fundament (4), wobei der Schwinger (2) relativ zu der Gegenmasse (3) mittels einer ersten Federgruppe beweglich gehalten und mittels eines Vibrationsantriebs antreibbar ist, wobei die Gegenmasse (3) mittels Federn (35) einer zweiten Federgruppe mit dem Fundament (4) verbunden ist, indem die Federn (35) der zweiten Federgruppe an einem jeweils oberen Federende mit dem Fundament (4) und an einem jeweils unteren Federende mit der Gegenmasse (3) verbunden sind, **dadurch gekennzeichnet, dass** von den Federn (35) der zweiten Federgruppe zumindest ein freier Federabschnitt (40) im Bereich seines oberen Endes drehbar an dem Fundament (4) und/oder im Bereich seines unteren Endes drehbar an der Gegenmasse (3) angelenkt ist.

2. Linear-Vibrationsförderer nach Anspruch 1, **dadurch gekennzeichnet, dass** der freie Federabschnitt (40) im Bereich seines oberen und/oder unteren Endes um eine oder mehrere verschiedene, insbesondere um beliebige, zur Federlängsrichtung senkrechte Richtungen und/oder um die Federlängsrichtung drehbar angelenkt ist.

3. Linear-Vibrationsförderer nach einem oder mehreren der vorangehenden Ansprüche, **dadurch gekennzeichnet, dass** der freie Federabschnitt (40) der Federn (35) in Federlängsrichtung federelastisch längenveränderbar und/ oder in einer oder mehreren, insbesondere in beliebigen, Richtungen quer zur Federlängsrichtung federelastisch biegbar ist.

4. Linear-Vibrationsförderer nach einem oder mehreren der vorangehenden Ansprüche, **dadurch gekennzeichnet, dass** die Federn (35) der zweiten Federgruppe als Zylinder-Druckfedern ausgebildet sind.

5. Linear-Vibrationsförderer nach Anspruch 4, **dadurch gekennzeichnet, dass** am oberen und/oder unteren Ende der Zylinder-Druckfeder einzelne oder mehrere Windungen in Umfangs-Klemmhalterungen eingespannt sind.

6. Linear-Vibrationsförderer nach einem oder mehreren der vorangehenden Ansprüche, **dadurch gekennzeichnet, dass** das Fundament (4) eine Grundplatte (24) und sich davon nach oben erstreckende Träger (25) aufweist, im Bereich deren oberen Enden die Federn (35) der zweiten Federgruppe gehalten sind.

7. Linear-Vibrationsförderer nach Anspruch 6, **dadurch gekennzeichnet, dass** die Gegenmasse (3) zwei in Längsrichtung (L) des Linear-Vibrationsförderers (1) orientierte, quer voneinander beabstandete Wangen (11) aufweist, dass der Schwinger (2) zwei in Längsrichtung orientierte, quer voneinander beabstandete Längsträger (5) aufweist, wobei die Längsträger (5) insbesondere unter bereichsweiser Überlappung zwischen den Wangen (11) liegen, dass sich die Träger (25) von der Grundplatte (24) ausgehend aufwärts zwischen den Längsträgern (5) und/oder Wangen (11) erstrecken, wobei an ihren oberen Enden Vorsprünge (33) quer zur Längsrichtung (L) durch Ausnehmungen (34) der Wangen (11) und/oder Längsträger (5) treten und die Federn (35) der zweiten Federgruppe an den Vorsprüngen (33) und an Halterungen (36) auf der Außenseite der Wangen (11) befestigt sind.

8. Linear-Vibrationsförderer nach einem oder mehreren der vorangehenden Ansprüche, **dadurch gekennzeichnet, dass** die Längsrichtung (L) des Schwingers (2) in Förderrichtung (F) zu einer horizontalen Bezugslinie fallend geneigt, insbesondere unter einem Neigungswinkel von circa 7 bis 10 Grad, verläuft.

9. Linear-Vibrationsförderer nach einem oder mehreren der vorangehenden Ansprüche, **dadurch gekennzeichnet, dass** die Federn (12) der ersten Federgruppe als Biegefedern, insbesondere als aus Blattfedern (14) zusammengesetzte Biegefederpakete (13), ausgebildet sind.

10. Linear-Vibrationsförderer nach einem oder mehreren der vorangehenden Ansprüche, **dadurch gekennzeichnet, dass** die Neigungsstellung der Federn (12) der ersten Federgruppe zur Senkrechten durch die Förderrichtung (F) des Schwingers (2) durch Verlagerung des unteren und/ oder oberen Angriffspunktes der Federn (12) stufenlos verstellbar ist, insbesondere unter Beibehaltung eines Magnetspalts (M) eines magnetischen Vibrationsantriebs.

11. Linear-Vibrationsförderer nach einem oder mehreren der vorangehenden Ansprüche, **dadurch gekennzeichnet, dass** an dem Schwinger (2) und/oder an der Gegenmasse (3) Kontergewichte (41, 42) in veränderbarer Gewichtshöhe und/oder veränderbarer Lage anbringbar sind.

12. Linear-Vibrationsförderer nach Anspruch 11, **dadurch gekennzeichnet, dass** das Kontergewicht (42) an der Gegenmasse (3) im Bereich der Eingabeseite (9) des Linear-Vibrationsförderers (1) insbesondere stirnendseitig angeordnet ist und dass das Kontergewicht (41) am Schwinger (2) im Bereich der Ausgabeseite (10) des Linear-Vibrationsförderers (1) insbesondere unterseitig angeordnet ist.

13. Linear-Vibrationsförderer nach einem oder mehreren der vorangehenden Ansprüche, **dadurch gekennzeichnet, dass** an dem Schwinger (2) Mittel zum Fördern und/ oder linearen Sortieren von Förder- bzw. Sortiergut vorgesehen sind.

## Claims

1. Linear vibratory conveyor having a vibrator (2), a counterweight (3) and a base (4), the vibrator (2) being movably mounted relative to the counterweight (3) by means of a first spring group and being drivable by means of a vibratory drive, the counterweight (3) being connected to the base (4) by means of springs (35) of a second spring group, the springs (35) of the second spring group being connected to the base (4) at a respective upper spring end and being connected to the counterweight (3) at a respective lower spring end, **characterised in that** at least one free spring portion (40) of the springs (35) of the second spring group is rotatably articulated on the base (4) in the region of its upper end and/or is rotatably articulated on the counterweight (3) in the region of its lower end.

2. Linear vibratory conveyor according to Claim 1, **characterised in that** the free spring portion (40) is rotatably articulated in the region of its upper and/or lower end about one or more different directions which are at right angles to the elongate direction of the spring and can in particular be chosen at will, and/or is rotatably articulated about the elongate direction of the spring.

3. Linear vibratory conveyor according to one or more of the preceding claims, **characterised in that** the free spring portion (40) of the springs (35) is adjustable in length in a spring-elastic manner in the longitudinal direction of the spring and/or is bendable in a spring-elastic manner in one or more directions which are transverse to the elongate direction of the spring and can in particular be chosen at will.

4. Linear vibratory conveyor according to one or more of the preceding claims, **characterised in that** the springs (35) of the second spring group are formed as cylindrical compression springs.

5. Linear vibratory conveyor according to Claim 4, **characterised in that** at the upper and/or lower end of the cylindrical compression spring, individual turns or several turns are clamped in circumferential clamping mounts.

6. Linear vibratory conveyor according to one or more of the preceding claims, **characterised in that** the base (4) is a base plate (24) and has carriers (25) extending upwardly therefrom, in the region of the upper ends of which the springs (35) of the second spring group are mounted.

7. Linear vibratory conveyor according to Claim 6, **characterised in that** the counterweight (3) has two cheeks (11) which are spaced apart from one another in a transverse direction and are oriented in the longitudinal direction (L) of the linear vibratory conveyor (1), **in that** the vibrator (2) has two elongate supports (5) which are spaced apart from one another in the transverse direction and oriented in the longitudinal direction, the elongate supports (5) being located in particular between the cheeks (11) with partial overlap, **in that** the carriers (25) extend upwardly between the elongate supports (5) and/or cheeks (11) starting from the base plate (24), projections (33) at the upper ends of the carriers passing transversely to the elongate direction (L) through openings (34) in the cheeks (11) and/or the elongate supports (5), and the springs (35) of the second spring group being secured to the projections (33) and to mounts (36) on the outer side of the cheeks (11).

8. Linear vibratory conveyor according to one or more of the preceding claims, **characterised in that** the elongate direction (L) of the vibrator (2) extends at a downward slope in the delivery direction (F) relative to a horizontal reference line, in particular at an angle of inclination of about 7 to 10 degrees.

9. Linear vibratory conveyor according to one or more of the preceding claims, **characterised in that** the springs (12) of the first spring group are formed as bending springs, in particular as a bending spring packet (13) assembled from leaf springs (14).

10. Linear vibratory conveyor according to one or more of the preceding claims, **characterised in that** the inclined position of the springs (12) of the first spring group to perpendiculars through the delivery direction (F) of the vibrator (2) is adjustable in a stepless manner by displacement of the lower and/or upper engagement points of the springs (12), with in particular retention of a magnet gap (M) of a magnetic vibratory drive.

11. Linear vibratory conveyor according to one or more of the preceding claims, **characterised in that** balance weights (41, 42) can be applied to the vibrator (2) and/or to the counterweight (3) at an adjustable weight height and/or an adjustable position.

12. Linear vibratory conveyor according to Claim 11, **characterised in that** the balance weight (42) on the counterweight (3) is located in the region of the input end (9) of the linear vibratory conveyor (1), in particular at its end, and that the balance weight (41) is located on the vibrator (2) in the region of the output end (10) of the linear vibratory conveyor (1), in particular on its underside.

13. Linear vibratory conveyor according to one or more of the preceding claims, **characterised in that** means are provided on the vibrator (2) for advance and/or linear sorting of material to be delivered or sorted.

## Revendications

1. Transporteur vibrant linéaire présentant un oscillateur (2), une contre-masse (3) et un socle (4), dans lequel l'oscillateur (2) est maintenu mobile par rapport à la contre-masse (3) au moyen d'un premier groupe de ressorts et peut être entraîné au moyen d'un entraînement vibrant, dans lequel la contre-masse (3) est reliée au socle (4) au moyen de ressorts (35) d'un deuxième groupe de ressorts, en ce sens que les ressorts (35) du deuxième groupe de ressorts sont reliés au socle (4) au niveau de chaque extrémité de ressort supérieure et à la contre-masse (3) au niveau de chaque extrémité de ressort inférieure, **caractérisé en ce qu'**au moins une section libre (40) des ressorts (35) du deuxième groupe de ressorts est articulée de façon rotative au socle (4) dans la région de son extrémité supérieure et / ou de façon rotative à la contre-masse (3) dans la région de son extrémité inférieure.

2. Transporteur vibrant linéaire selon la revendication 1, **caractérisé en ce que** la section libre (40) de ressort est articulée dans la région de son extrémité supérieure et / ou de son extrémité inférieure à rotation autour d'une ou plusieurs directions différentes, en particulier autour de directions quelconques perpendiculaires à la direction longitudinale des ressorts et / ou autour de la direction longitudinale des ressorts.

3. Transporteur vibrant linéaire selon une ou plusieurs des revendications précédentes, **caractérisé en ce que** la section libre (40) des ressorts (35) est modifiable en longueur de manière élastique dans la direction longitudinale des ressorts et / ou peut être fléchie de manière élastique transversalement à la direction longitudinale des ressorts dans une ou plusieurs directions, en particulier dans des directions quelconques.

4. Transporteur vibrant linéaire selon une ou plusieurs des revendications précédentes, **caractérisé en ce que** les ressorts (35) du deuxième groupe de ressorts sont configurés comme des ressorts de pression cylindriques.

5. Transporteur vibrant linéaire selon la revendication 4, **caractérisé en ce qu'**à l'extrémité supérieure et / ou inférieure du ressorts de pression cylindrique, des spires individuelles ou multiples sont serrées dans des dispositifs de fixation par serrage périphériques.

6. Transporteur vibrant linéaire selon une ou plusieurs des revendications précédentes, **caractérisé en ce que** le socle (4) présente une plaque de base (24) et des supports (25) s'étendant à partir de celle-ci vers le haut, les ressorts (35) du deuxième groupe de ressorts étant maintenus dans la région des extrémités supérieures de ces supports.

7. Transporteur vibrant linéaire selon la revendication 6, **caractérisé en ce que** la contre-masse (3) présente deux joues (11) orientées dans la direction longitudinale (L) du transporteur vibrant linéaire (1) et espacées transversalement l'une de l'autre, **en ce que** l'oscillateur (2) présente deux supports longitudinaux (5) orientés dans la direction longitudinale et espacés transversalement l'un de l'autre, les supports longitudinaux (5) se trouvant entre les joues (11) en particulier en les recouvrant partiellement, **en ce que** les supports (25) s'étendent en partant de la plaque de base (24) vers le haut entre les supports longitudinaux (5) et / ou les joues (11), des saillies (33) s'avançant au niveau de leurs extrémités supérieures transversalement à la direction longitudinale (L) à travers des évidements (34) des joues (11) et / ou des supports longitudinaux (5) et les ressorts (35) du deuxième groupe de ressorts étant fixés aux saillies (33) et aux dispositifs de fixation (36) sur le côté extérieur des joues (11).

8. Transporteur vibrant linéaire selon une ou plusieurs des revendications précédentes, **caractérisé en ce que** la direction longitudinale (L) de l'oscillateur (2) est inclinée en pente dans le sens de transport (F) par rapport à une ligne de référence horizontale, en particulier à un angle d'inclinaison d'environ 7 à 10 degrés.

9. Transporteur vibrant linéaire selon une ou plusieurs des revendications précédentes, **caractérisé en ce que** les ressorts (12) du premier groupe de ressorts sont réalisés comme des ressorts de flexion, en particulier comme des paquets de ressorts de flexion (13) composés de ressorts à lame (14).

10. Transporteur vibrant linéaire selon une ou plusieurs des revendications précédentes, **caractérisé en ce que** la position d'inclinaison des ressorts (12) du premier groupe de ressorts par rapport à la verticale peut, au niveau de la direction de transport (F) de l'oscillateur (2), être réglée en continu par déplacement du point d'attaque inférieur et / ou supérieur des ressorts (12), en particulier en maintenant un entrefer (M) d'un entraînement vibrant magnétique.

11. Transporteur vibrant linéaire selon une ou plusieurs des revendications précédentes, **caractérisé en ce que** des contrepoids (41, 42) peuvent être appliqués sur l'oscillateur (2) et / ou sur la contre-masse (3) avec des poids modifiables et / ou dans des positions modifiables.

12. Transporteur vibrant linéaire selon la revendication 11, **caractérisé en ce que** le contrepoids (42) sur la contre-masse (3) est disposé dans la région du côté d'entrée (9) du transporteur vibrant linéaire (1), en particulier du côté de l'extrémité frontale, et **en ce que** le contrepoids (41) sur l'oscillateur (2) est disposé dans la région du côté de la sortie (10) du transporteur vibrant linéaire (1), en particulier du côté inférieur.

13. Transporteur vibrant linéaire selon une ou plusieurs des revendications précédentes, **caractérisé en ce que** des moyens pour transporter et / ou trier linéairement des produits à transporter et / ou à trier sont prévus sur l'oscillateur (2).
